# EUROPEAN PATENT SPECIFICATION

(11) **EP 3 905 624 B1**
(45) Date of publication and mention of the grant of the patent: **11.09.2024**
(21) Application number: 19903904.1
(22) Date of filing: 27.06.2019
(51) Int. Cl.: H04L 9/40

(54) **BOTNET DOMAIN NAME FAMILY DETECTING METHOD, DEVICE, AND STORAGE MEDIUM**
VERFAHREN ZUR DETEKTION VON BOTNET-DOMAINNAMENFAMILIE, VORRICHTUNG UND SPEICHERMEDIUM
PROCÉDÉ DE DÉTECTION DE FAMILLE DE NOMS DE DOMAINES DE RÉSEAU DE ZOMBIES, DISPOSITIF, ET SUPPORT DE STOCKAGE

(30) Priority: 24.12.2018 CN 201811584694
(43) Date of publication of application: 03.11.2021
(73) Proprietor: Forenova Technologies B.V, 1043 GR Amsterdam (NL)
(72) Inventor: YAN, Fan, Shenzhen, Guangdong 518055 (CN); ZHAO, Zhenyang, Shenzhen, Guangdong 518055 (CN); GU, Liang, Shenzhen, Guangdong 518055 (CN)
(74) Representative: Müller Schupfner & Partner Patent- und Rechtsanwaltspartnerschaft mbB (Muc)
(86) International application number: PCT/CN2019/093331
(87) International publication number: WO 2020/133986

(56) References cited:
- CN-A- 102 045 215
- CN-A- 107 566 376
- US-B2- 8 763 117
- US-B2- 9 922 190
- LEE JEHYUN ET AL: "GMAD: Graph-based Malware Activity Detection by DNS traffic analysis", COMPUTER COMMUNICATIONS, ELSEVIER SCIENCE PUBLISHERS BV, AMSTERDAM, NL, vol. 49, 9 May 2014 (2014-05-09), pages 33 - 47, XP028873464, ISSN: 0140-3664, DOI: 10.1016/J.COMCOM.2014.04.013
- WANG TZY-SHIAH ET AL: "DGA Botnet Detection Utilizing Social Network Analysis", 2016 INTERNATIONAL SYMPOSIUM ON COMPUTER, CONSUMER AND CONTROL (IS3C), IEEE, 4 July 2016 (2016-07-04), pages 333 - 336, XP032947305, DOI: 10.1109/IS3C.2016.93
- NAN JIANG ET AL: "Identifying suspicious activities through DNS failure graph analysis", NETWORK PROTOCOLS (ICNP), 2010 18TH IEEE INTERNATIONAL CONFERENCE ON, IEEE, 5 October 2010 (2010-10-05), pages 144 - 153, XP031864723, ISBN: 978-1-4244-8644-1, DOI: 10.1109/ICNP.2010.5762763

## Description

This application claims priority to Chinese Patent Application No. 201811584694.2, titled "BOTNET DOMAIN NAME FAMILY DETECTING METHOD, APPARATUS, DEVICE, AND STORAGE MEDIUM", filed on December 24, 2018 with the Chine National Intellectual Property Administration (CNIPA).

### TECHNICAL FIELD

The present disclosure generally relates to the technical field of information security, and particularly, to a method and a device for detecting a domain name family of a botnet, and a computer-readable storage medium.

### BACKGROUND

A botnet poses a serious threat to network security. A criminal uses the botnet to launch distributed denial of service (DDoS) attacks, conduct malicious mining, steal information, and send spam, which seriously endanger interests of countries, enterprises, organizations, and individuals. It is very significant to quickly and accurately identify botnet communications and block them in time. A large number of botnets send command and control (C&C) information to communicate with a bot host based on a domain name system (DNS) protocol.

A mainstream method for detecting a domain name family of a botnet mainly includes detection based on a grammatical feature and detection based on virus traffic.

The detection of the domain name family of the botnet based on the grammatical feature considers that domain names belonging to the same botnet family have similarity in grammatical features. The domain names of the same botnet family are often generated using the same domain generation algorithm (DGA). A large number of random domain names with similar grammatical features are generated to escape blacklist detection. Domain names generated by different DGA algorithms may be distinguished by extracting features in the domain name such as proportion of consonants in a domain name, the longest meaningful length, and n-gram (distribution of n consecutive words in a text or language), thereby discovering domain names belonging to the same botnet family. Recently, recurrent neural network (RNN) is also being used in the detection of the DGA domain names. DGA domain names belonging to the same botnet family are found by learning characteristics of character sequences formed by the domain names through RNN. However, not all botnet families use only the DGA algorithm to generate C&C domain names. Once the C&C domain names of the same family do not have obvious similarity in grammatical features, this detection algorithm of the domain name family of the botnet cannot achieve good performance.

The detection of the domain name family of the botnet based on virus traffic clusters and detects C&C domain names by family through family information of malicious files. Whether two domain names belong to the same botnet family may be analyzed by analyzing domain names accessed by malicious files belonging to the same virus family. Although this method does not simply rely on the grammatical features of the domain names, it is restricted by the number of virus samples. In addition, a virus interferes with this method by accessing some legitimate domain names, leading to certain false positives. Some studies show that active time of a large number of C&C domains are several weeks or even several months earlier than the time when a corresponding virus sample is obtained, which results in a certain lag in the method based on virus traffic, and it is impossible to detect and eliminate the threat in the first time.

Document "GMAD: Graph-based Malware Activity Detection by DNS traffic analysis" discloses a method in which GMAS utilizes a sequence of DNS queries in order to achieve robustness against evasion techniques. GMAD uses a graph which expresses DNS query sequences to detect infected clients and malicious domain names. GMAD applies domain name clustering using the graph structure and determines malicious clusters by referring to public blacklists.

Patent US 9922190B2 discloses a system and method for detecting a domain generation algorithm (DGA), comprising: performing processing associated with clustering, utilizing a name-based features clustering module accessing information from an electronic database of NX domain information, the randomly generated domain names based on the similarity in the make-up of the randomly generated domain names; performing processing associated with clustering, utilizing a graph clustering module, the randomly generated domain names based on the groups of assets that queried the randomly generated domain names; performing processing associated with determining, utilizing a daily clustering correlation module and a temporal clustering correlation module, which clustered randomly generated domain names are highly con-elated in daily use and in time; and performing processing associated with determining the DGA that generated the clustered randomly generated domain names.

Document "DGA Botnet Detection Utilizing Social Network Analysis" proposes a DGA botnet detection mechanism utilizing the feature-based characteristics of social networks. The effectiveness of this mechanism was measured by implementing it in a campus network environment and observing it over eighteen months. The most interesting finding of this experiment is a new class of DGA botnet with a query pattern that has not been detected before, the results show that the proposed mechanism has the ability to accurately and effectively detect both well-known and new malicious DGA botnets in real-world networks.

### SUMMARY

An object of the present disclosure is to provide a method, device, and apparatus for detecting a domain name family of a botnet, and a computer-readable storage medium, to solve problems of single detection dimension, excessive reliance on virus sample collection, and poor real-time detection in conventional detection of the domain name family of the botnet. The invention is set out in the appended set of claims.

The method for detecting the domain name family of the botnet obtains suspicious domain names; builds a domain name space-time correlation graph based on correlations between suspicious domain names in different dimensions, where in the domain name space-time correlation graph, each suspicious domain name is taken as a node, an edge is formed between two domain names having at least one correlation, and the correlation between the two domain names is taken as an attribute value of the edge; and determines domain names that are closely correlated in the domain name space-time correlation graph according to a determination index of a compactness of each node in graph computing, and takes a set of the corresponding domain names as the domain name family of the botnet. Compared with the family detection method based on grammatical features that only cares about a certain level of correlation, the present disclosure may uniformly express the correlations between different dimensions and between domain names in a form of the correlation graph, thus having a stronger detection capability. Furthermore, the detection of the present disclosure does not depend on virus traffic and can detect the botnet domain name family more quickly and process it in time, thereby reducing various losses caused and having wider applicability. In addition, the device, apparatus and computer-readable storage medium for detecting the domain name family of the botnet with the above technical advantages are further provided in the present disclosure.

### BRIEF DESCRIPTION OF THE DRAWINGS

In order to more clearly explain the embodiments of the present invention or the technical solutions in the prior art, the drawings used in the description of the embodiments or the prior art will be briefly introduced below. Obviously, the drawings in the following description are merely some embodiments of the present disclosure. For those of ordinary skill in the art, other drawings can be obtained according to the provided drawings without paying creative labor.
Figure 1 is a flow chart of a specific implementation of a method for detecting a domain name family of a botnet according to the present disclosure;
Figure 2 is a flow chart of a process of removing an abnormal subgraph and an abnormal node in a domain name space-time correlation graph in the present disclosure; and
Figure 3 is a structural block diagram of a device for detecting a domain name family of a botnet according to an embodiment of the present disclosure.

### DETAILED DESCRIPTION

For those skilled in the art to better understand technical solutions of the present application, the present application will be further described in detail in conjunction with drawings and embodiments hereinafter. It is obvious that the described embodiments are only a part of the embodiments according to the present application, rather than all of the embodiments. All the other embodiments obtained by those skilled in the art based on the embodiments in the present application without any creative work belong to the scope of protection of the present application.

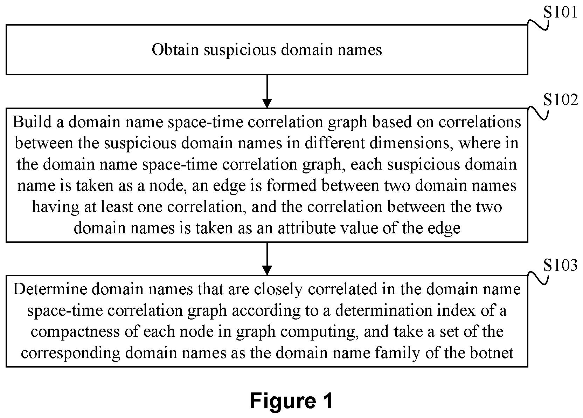

A flow chart of a specific implementation of a method for detecting a domain name family of a botnet according to the present disclosure is illustrated in Figure 1. The method includes steps S101 to S103.

In step S101, suspicious domain names are obtained.

A suspicious domain name refers to a domain name that has been excluded from a legitimate name that is obviously normal and has at least one abnormal behavior detected, for example, a grammatical characteristic of the domain name is particularly like a DGA domain name, or active time of the domain name is always concentrated in early morning. Whitelisting technology may be used to exclude the domain name that is obviously normal, such as adding domain names with higher Alexa rankings to the whitelist, and considering that these higher-ranked domain names are unlikely to be C&C domain names of the botnet.

In step S102, a domain name space-time correlation graph is built based on correlations between the suspicious domain names in different dimensions, where in the domain name space-time correlation graph, each suspicious domain name is taken as a node, an edge is formed between two domain names having at least one correlation, and the correlation between the two domain names is taken as an attribute value of the edge.

These suspicious domain names may be analyzed after obtained in step S101, to obtain the correlations of the suspicious domain names in different dimensions. As a specific implementation mode, the correlation between domain names may be expressed in a form of a triple, such as (domain name 1, domain name 2, a correlation index). The correlation index in the triple includes a dimension of the correlation and similarity measure of the two domain names in this dimension. For different correlation dimensions, different targeted measure indexes may be set to measure similarity of two domain names in this dimension. Two domain names may have similarities in multiple feature dimensions, which means that in the triplet the correlation index may be represented by an array.

The correlation between the different dimensions includes any combination of the following features: similarity in grammatical features of the domain names, similarity in correlation between the domain names and virus, similarity in IP addresses resolved from the domain names, and similarity in access traffics of the domain names. Of course, the correlation is not limited to the above categories. As many and as comprehensive dimensions as possible may be selected to analyze the correlation of the domain names, including all aspects of domain name behavior. If a correlation in a new dimension is found, feature analysis of this dimension may be added to the analysis, which has a strong expansibility.

In this embodiment, a graph database may be used to build and store the space-time correlation graph based on the triple, and subsequent expansion of the space-time correlation graph with advancement of time may also be conveniently operated based on the graph database. The domain name space-time correlation graph depicts correlations of the domain names in time and space. A spatial correlation refers to correlations in various dimensions. A temporal correlation refers to the relationship of domain names over time. Domain names that were not originally correlated may become correlated in certain dimensions as time progresses and certain security incidents occur.

In the built domain name space-time correlation graph, each suspicious domain name is taken as the node, and the edge is formed between two domain names having at least one correlation, and the correlation between the two domain names is taken as an attribute value of the edge. An edge may have multiple attributes, and each attribute corresponds to correlation of a dimension, which may include time when the domain name is detected as suspicious, or whether the domain name can be resolved successfully to get the IP address. For example, if domain name 1 and domain name 2 are correlated, then in the domain name space-time correlation graph, the domain name 1 and the domain name 2 are connected by an edge. In other words, only domains that are correlated in at least one dimension have a connected edge. Take the correlation between domain names, such as (correlation dimension A, the degree of similarity corresponding to correlation dimension A; correlation dimension B, the degree of similarity corresponding to correlation dimension B; correlation dimension C, the degree of similarity corresponding to correlation dimension C...) as the attribute of the edge.

In step S103, domain names that are closely correlated in the domain name space-time correlation graph are determined according to a determination index of a compactness of each node in graph computing, and a set of the corresponding domain names are taken as the domain name family of the botnet.

Connectivity, that is, the compactness of each node, may have multiple metrics, and different metrics have better performance in different scenarios. Sparsity and average clustering degree are two relatively suitable indexes to measure the connectivity of subgraphs. Sparsity is defined as a ratio of the number of edges in the graph to the number of fully connected graph edges formed by nodes in the graph. The average clustering degree is defined as an average of a ratio of the number of triangles around the node to the number of potential triangles. The sparsity index may accurately measure the compactness of the graph when the number of nodes is small, and the average clustering degree may accurately measure the compactness of the graph when the number of nodes is large. Therefore, the combination of sparsity and average clustering degree may more accurately measure the compactness or connectivity of the graph. As a specific implementation mode, the present disclosure may determine and obtain domain names that are closely correlated in the domain name space-time correlation graph based on the sparsity and the average clustering degree.

The method for detecting the domain name family of the botnet obtains suspicious domain names; builds a domain name space-time correlation graph based on correlations between suspicious domain names in different dimensions, where in the domain name space-time correlation graph, each suspicious domain name is taken as a node, an edge is formed between two domain names having at least one correlation, and the correlation between the two domain names is taken as an attribute value of the edge; and determines domain names that are closely correlated in the domain name space-time correlation graph according to a determination index of a compactness of each node in graph computing, and takes a set of the corresponding domain names as the domain name family of the botnet. Compared with the family detection method based on grammatical features that only cares about a certain level of correlation, the present disclosure may uniformly express the correlations between different dimensions and between domain names in a form of the correlation graph, thus having a stronger detection capability. Furthermore, the detection of the present disclosure does not depend on virus traffic, and can detect the botnet family more quickly and process it in time, thereby reducing various losses caused, and having wider applicability.

The present disclosure may comprehensively consider the similarity between domain names in each dimension, build the domain name space-time correlation graph, exclude abnormal subgraphs in the graph based on the graph computing, and exclude abnormal nodes in the normal subgraphs, leaving only the closest correlated domain names to constitute the botnet family. Finally, the present disclosure takes the botnet family or a compact subgraph as a unit, and further analyzes the botnet family from the dimensions such as virus traffic, the grammar characteristics of the domain names, to eliminate possible false positives.

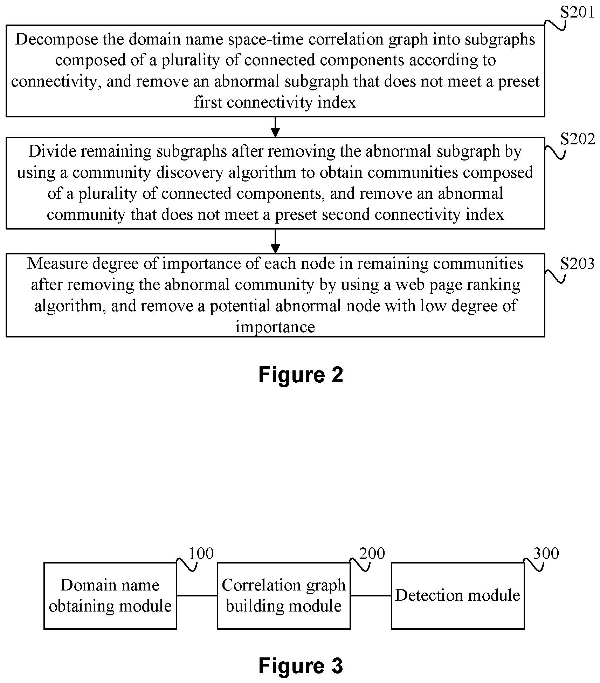

In an embodiment of the present disclosure, determining the domain names that are closely correlated in the domain name space-time correlation graph according to the determination index of the compactness of each node in the graph computing may specific be: removing an abnormal subgraph and an abnormal node in the domain name space-time correlation graph to determine the domain names that are closely correlated in the domain name space-time correlation graph. Referring to Figure 2, a process of removing the abnormal subgraph and the abnormal node in the domain name space-time correlation graph in the present disclosure may specifically include steps S201-S203.

In step S201, the domain name space-time correlation graph is decomposed into subgraphs composed of a plurality of connected components according to connectivity, and an abnormal subgraph that does not meet a preset first connectivity index is removed.

The preset first connectivity index may be that the number of nodes in a subgraph is greater than a preset threshold and the connectivity is strong. When the number of nodes in the subgraph is too small, it means that too little information is collected for the botnet domain name of the family, so it is difficult to accurately analyze the correlation between the domain names of the family, so the subgraphs with fewer nodes are discarded, and wait for further analysis after collecting enough information. In this way, the subgraphs with a sufficient number of nodes and strong connectivity may be further analyzed, and the remaining subgraphs may be discarded.

It should be pointed out that the connectivity in this step not only includes a specific metric, but also includes the compactness metrics of multiple graphs.

In this step, since the initial space-time correlation graph contains all botnet families that need to be analyzed, nature of dealing with massive graph-structured storage in performing the connected component discovery requires a large amount of memory and computing power, so distributed processing is required. When calculating the connectivity of the subgraphs formed by connected components, one or more metrics may be selected according to requirements, and the subgraphs that are not closely connected are excluded.

In step S202, remaining subgraphs after removing the abnormal subgraph are divided by using a community discovery algorithm to obtain communities composed of a plurality of connected components, and an abnormal community that does not meet a preset second connectivity index is removed.

A community refers to a group structure with close internal connections and sparse external. The community discovery algorithm may discover such group structure by measuring the correlation between nodes. The community discovery algorithm is used to divide a subgraph composed of components with strong connectivity into several communities with more strong connectivity, and discard communities with less connectivity. The subgraph obtained by the community discovery algorithm has a stronger compactness, so the possibility of belonging to the same botnet family is greater, and the possibility of false positives is smaller.

It should be pointed out that the second connectivity index in the present disclosure should be more stringent than the first connectivity index in terms of connectivity indexes, because the compactness of the subgraph formed by the communities is stronger than the connectivity of the subgraph formed by the connected components where the community is located.

When selecting the community discovery algorithm in this step, it is necessary to comprehensively consider accuracy and time complexity of the algorithm. Some algorithms with good community division performance often require a lot of computing resources and consume a lot of computing time. While some heuristic algorithms may quickly discover communities, but a result of the division need to be further considered. Therefore, in actual deployment, the accuracy and time complexity need to be weighed according to actual needs.

In step S203, degree of importance of each node in remaining communities after removing the abnormal community is measured by using a web page ranking algorithm, and a potential abnormal node with low degree of importance is removed.

The web page ranking algorithm is originally used to measure importance of a particular web page relative to other web pages in a search engine index. In a graph, the web page ranking algorithm may measure importance degree of a node in entire graph based on degree of correlation between the node and other nodes. For a community with sufficiently strong connectivity, the web page ranking algorithm is used to measure importance of each node in the community, eliminate the potential abnormal point with lower importance, and further improve the compactness and connectivity of the community.

A graph is inputted in the webpage ranking algorithm and a measure of the importance of each node in the graph is outputted. A sum of webpage rank values of all nodes is 1. Intuitively, if a node is correlated with more other nodes, its importance in the graph is stronger. Sorting the nodes in the graph by their page rank values reveals nodes that are less important and less relevant to other nodes in the graph. By deleting these nodes from the graph, the nodes in the graph may be guaranteed to have strong connectivity with each other. A method of detecting an abnormal point based on the page rank value may include a variety of statistical methods. By analyzing distribution of the page rank values of the nodes in the graph, the nodes whose page rank values are clearly lower than the average level may be found, and then these nodes may be deleted from the graph.

The domain names belonging to the same community have been filtered many times before, and the reserved nodes have a strong correlation and strong cohesion. Therefore, these nodes are considered to belong to the same botnet family. So far, clustering of nodes of the same botnet family is completed.

On the basis of any of the foregoing embodiments, after taking the set of the corresponding domain names as the domain name family of the botnet, the method for detecting the domain name family of the botnet provided in the present disclosure further includes:

analyzing a family characteristic of the domain name family of the botnet, and performing security detection on an application scenario based on the analyzed family characteristic.

A main characteristic of each family is mainly determined by the attribute value of the edge in the community composed of the domain names of the family. The attribute value of the edge includes one or more of the similarity in the grammatical features of the domain names, the similarity in the correlation between the domain names and the virus, the IP address resolved from the domain names, and the similarity in access traffics of the domain names. By analyzing the attribute values of the edge, a reason why the domain names of the family are clustered together can be understood, so as to understand the main characteristic of the domain names in the botnet family.

The obtained black domain name may be deployed in a variety of security detection application scenarios, including but not limited to adding a database of black domain names, and performing reputation scores of domain names. The domain names clustered in the same botnet family usually contain both known C&C domain names and newly discovered domain names. By evaluating a degree of correlation between newly discovered domain names and the known C&C domain names, a confidence coefficient that these newly discovered domain names are malicious may be given, that is, a reputation of the domain name may be determined.

Further, the present disclosure may also include: determining whether a new domain name belongs to the domain name family of the botnet by determining correlation between the new domain name and a known domain name, to monitor variant and expansion of the domain name family of the botnet.

As collection of information of the domain name becomes more and more complete, more information of the domain name and correlation information of the domain name about a botnet family may be obtained, and the domain name space-time correlation graph of this family may become more and more complete. Many domain name family that was not continuously analyzed originally because the number of nodes in the graph was not enough or the connectivity was not close enough may no longer be filtered out with the collection of information, resulting in more detection results. Subgraphs originally considered to belong to two botnet families may be found to belong to the same botnet family due to continuous improvement of information collection.

In order to escape detection, a hacker uses a new domain name to communicate. Since correlations of the new domain name and the known domain names may be evaluated in multiple dimensions, and a data structure of the graph may be used to express the correlations, it is easy to determine whether the new domain name belongs to a previously detected botnet family based on the space-time correlation graph of the botnet family, to observe the evolution and expansion of the family. In addition, due to instantaneity of the method for detecting the domain name family of the botnet based on graph computing, the newly added C&C domain name of a certain botnet family may be detected in time.

The present disclosure analyzes the similarity between domain names in each dimension, uniformly expresses the similarity of different dimensions with the data structure of the graph, and forms the domain name space-time correlation graph. The graph computing algorithm is executed on the space-time correlation graph, several subgraphs with strong cohesion and weak outreach are found after connected components discovery, community discovery, and abnormal point detection based on web page ranking. Each subgraph corresponds to a domain name family of botnet. The present disclosure does not rely on only a characteristic of a certain dimension to cluster and detect C&C domain names belonging to the same botnet family, but comprehensively considers the similarity correlation between the domain names in various dimensions, therefore the domain names belonging to the same botnet family may be more comprehensively analyzed and has stronger scalability. A feature of the newly added dimension may also be easily added to the detection method proposed in the present disclosure. The detection method proposed in the present disclosure has strong real-time performance, and it is not necessary to obtain a malicious file sample corresponding to the C&C domain name before analyzing the botnet family to which it belongs.

Further, the present disclosure may analyze different properties of different types of C&C domain names based on the family and further apply the family analysis result to other security detection scenarios. In addition, the present disclosure may also track the evolution and expansion of the domain name family of the botnet, and discover new C&C domain name in the family in time.

A device for detecting a domain name family of a botnet provided in the embodiments of the present disclosure is introduced below. The device for detecting the domain name family of the botnet described below and the method for detecting the domain name family of the botnet described above may be referred to each other.

Figure 3 is a structural block diagram of the device for detecting the domain name family of the botnet according to an embodiment of the present disclosure. Referring to Figure 3, the device for detecting the domain name family of the botnet may include: a domain name obtaining module 100, a correlation graph building module 200, and a detection module 300.

The domain name obtaining module 100 is configured to obtain suspicious domain names.

The correlation graph building module 200 is configured to build a domain name space-time correlation graph based on correlations between the suspicious domain names in different dimensions, where in the domain name space-time correlation graph, each suspicious domain name is taken as a node, an edge is formed between two domain names having at least one correlation, and the correlation between the two domain names is taken as an attribute value of the edge.

The detection module 300 is configured to determine domain names that are closely correlated in the domain name space-time correlation graph according to a determination index of a compactness of each node in graph computing, and take a set of the corresponding domain names as the domain name family of the botnet.

The detection module 300 is specifically configured to determine domain names that are closely correlated in the domain name space-time correlation graph according to sparseness and average clustering degree.

As a specific implementation manner, the detection module 300 is specifically configured to remove an abnormal subgraph and an abnormal node in the domain name space-time correlation graph to determine domain names that are closely correlated in the domain name space-time correlation graph.

The correlations in different dimensions includes any combination of the following characteristics:
similarity in grammatical features of the domain names, similarity in correlations between the domain names and a virus, similarity in IP addresses resolved from the domain names, and similarity in access traffics of the domain names.

On the basis of any of the foregoing embodiments, the device for detecting the domain name family of the botnet provided in the present disclosure may further include a security detection module.

The security detection module is configured to analyze, after taking the set of the corresponding domain names as the domain name family of the botnet, a family characteristic of the domain name family of the botnet, and perform security detection on an application scenario based on the analyzed family characteristic.

In addition, on the basis of any of the foregoing embodiments, the device for detecting the domain name family of the botnet provided in the present disclosure may further include a monitoring module.

The monitoring module is configured to determine, after taking the set of the corresponding domain names as the domain name family of the botnet, whether a new domain name belongs to the domain name family of the botnet by determining correlation between the new domain name and a known domain name, to monitor variant and expansion of the domain name family of the botnet.

The device for detecting the domain name family of the botnet of this embodiment is used to implement the aforementioned method for detecting the domain name family of the botnet. Therefore, the specific implementation mode of the device for detecting the domain name family of the botnet may be seen in the aforementioned implementation mode of the method for detecting the domain name family of the botnet. For example, the domain name obtaining module 100, the correlation graph building module 200, and the detection module 300 are respectively used to implement steps S101, S102, and S103 in the above method for detecting the domain name family of the botnet. Therefore, the specific implementation mode may refer to the corresponding description of each part of the embodiments, and will not be repeated here.

In another aspect, an apparatus for detecting a domain name family of a botnet is further provided in the present disclosure, including a memory and a processor.

The memory is configured to store a computer program.

The processor is configured to execute the program to implement the steps of any of the foregoing methods for detecting the domain name family of the botnet.

In another aspect, a computer-readable storage medium is further provided in the present application, the computer-readable storage medium stores a computer program that, when executed by a processor, implements the steps of any of the foregoing methods for detecting the domain name family of the botnet.

To sum up, the present disclosure analyzes the similarity between domain names in each dimension, uniformly expresses the similarity of different dimensions with the data structure of the graph, and forms the domain name space-time correlation graph. The graph computing algorithm is executed on the space-time correlation graph, several subgraphs with strong cohesion and weak outreach are found after connected component discovery, community discovery, and abnormal point detection based on web page ranking. Each subgraph corresponds to a domain name family of botnet. The present disclosure does not rely on only a characteristic of a certain dimension to cluster and detect C&C domain names belonging to the same botnet family, but comprehensively considers the similarity correlation between the domain names in various dimensions, therefore the domain name may be more comprehensively analyzed and has stronger scalability. A feature of the newly added dimension may also be easily added to the detection method proposed in the present disclosure. The detection method proposed in the present disclosure has strong real-time performance, and it is not necessary to obtain a malicious file sample corresponding to the C&C domain name before analyzing the botnet family to which it belongs.

The above embodiments in this specification are described in a progressive manner. Each of the embodiments is mainly focused on describing its differences from other embodiments, and references may be made among these embodiments with respect to the same or similar portions among these embodiments. Since device embodiments are similar to method embodiments, the description thereof is relatively simple, and reference may be made to the description of the method embodiments for relevant parts.

Persons skilled in the art may further realize that, in combination with the embodiments herein, units and algorithm, steps of each example described can be implemented with electronic hardware, computer software, or the combination thereof. In order to clearly describe the interchangeability between the hardware and the software, compositions and steps of each example have been generally described according to functions in the foregoing descriptions. Whether the functions are executed in a mode of hardware or software depends on particular applications and design constraint conditions of the technical solutions. Persons skilled in the art can use different methods to implement the described functions for each particular application, but it should not be considered that the implementation goes beyond the scope of the embodiments of the present disclosure.

In combination with the embodiments herein, steps of the method or algorithm described may be directly implemented using hardware, a software module executed by a processor, or the combination thereof. The software module may be placed in a random access memory (RAM), a memory, a read-only memory (ROM), an electrically programmable ROM (EPROM), an electrically erasable programmable ROM (EEPROM), a register, a hard disk, a removable magnetic disk, a CD-ROM, or any storage medium of other forms well-known in the technical field.

The method, device, and apparatus for detecting the domain name family of the botnet and the computer-readable storage medium provided in the present disclosure are described in detail above. Specific examples are used in the description to describe principles and implementations of the present disclosure. The description of the above examples is only used to help understand the method and core ideas of the present disclosure. It should be pointed out that for those of ordinary skill in the art, without departing from the principles of the present disclosure, several improvements and modifications can be made to the present disclosure, and these improvements and modifications also fall within the protection scope of the claims of the present disclosure.

## Claims

1. A method for detecting a domain name family of a botnet, comprising:
obtaining (S101) suspicious domain names;
building (S102) a domain name space-time correlation graph based on correlations between the suspicious domain names in different dimensions, wherein in the domain name space-time correlation graph, each suspicious domain name is taken as a node, an edge is formed between two domain names having at least one correlation, and the correlation between the two domain names is taken as an attribute value of the edge, wherein the correlations in different dimensions comprises any combination of the following characteristics: similarity in grammatical features of the domain names, similarity in correlations between the domain names and a virus, similarity in IP addresses resolved from the domain names, and similarity in access traffics of the domain names; and
determining (S103) domain names that are closely correlated in the domain name space-time correlation graph according to a determination index of a compactness of each node in graph computing, and taking a set of the corresponding domain names as the domain name family of the botnet.

2. The method for detecting the domain name family of the botnet according to claim 1, wherein determining the domain names that are closely correlated in the domain name space-time correlation graph according to the determination index of the compactness of each node in graph computing comprises:
determining the domain names that are closely correlated in the domain name space-time correlation graph according to sparseness and average clustering degree.

3. The method for detecting the domain name family of the botnet according to claim 1, wherein determining the domain names that are closely correlated in the domain name space-time correlation graph according to the determination index of the compactness of each node in graph computing comprises:
removing an abnormal subgraph and an abnormal node in the domain name space-time correlation graph, and determining the domain names that are closely correlated in the domain name space-time correlation graph.

4. The method for detecting the domain name family of the botnet according to claim 3, wherein removing the abnormal subgraph and the abnormal node in the domain name space-time correlation graph comprises:
decomposing (S201) the domain name space-time correlation graph into subgraphs composed of a plurality of connected components according to connectivity, and removing an abnormal subgraph that does not meet a preset first connectivity index;
dividing (S202) remaining subgraphs after removing the abnormal subgraph by using a community discovery algorithm to obtain communities composed of a plurality of connected components, and removing an abnormal community that does not meet a preset second connectivity index; and
measuring (S203) degree of importance of each node in remaining communities after removing the abnormal community by using a web page ranking algorithm, and removing a potential abnormal node with low degree of importance.

5. The method for detecting the domain name family of the botnet according to any one of claims 1 to 4, wherein after taking the set of the corresponding domain names as the domain name family of the botnet, the method further comprises:
analyzing a family characteristic of the domain name family of the botnet, and performing security detection on an application scenario based on the analyzed family characteristic.

6. The method for detecting the domain name family of the botnet according to claim 5, wherein after taking the set of the corresponding domain names as the domain name family of the botnet, the method further comprises:
determining whether a new domain name belongs to the domain name family of the botnet by determining correlation between the new domain name and a known domain name, to monitor variant and expansion of the domain name family of the botnet.

7. A device for detecting a domain name family of a botnet, comprising:
a domain name obtaining module (100) configured to obtain suspicious domain names;
a correlation graph building module (200) configured to build a domain name space-time correlation graph based on correlations between the suspicious domain names in different dimensions, wherein in the domain name space-time correlation graph, each suspicious domain name is taken as a node, an edge is formed between two domain names having at least one correlation, and the correlation between the two domain names is taken as an attribute value of the edge, wherein the correlations in different dimensions comprises any combination of the following characteristics: similarity in grammatical features of the domain names, similarity in correlations between the domain names and a virus, similarity in IP addresses resolved from the domain names, and similarity in access traffics of the domain names; and
a detection module (300) configured to determine domain names that are closely correlated in the domain name space-time correlation graph according to a determination index of a compactness of each node in graph computing, and take a set of the corresponding domain names as the domain name family of the botnet.

8. The device for detecting the domain name family of the botnet according to claim 7, wherein the detection module is configured to:
determine the domain names that are closely correlated in the domain name space-time correlation graph according to sparseness and average clustering degree.

9. The device for detecting the domain name family of the botnet according to claim 7, wherein the detection module is configured to:
remove an abnormal subgraph and an abnormal node in the domain name space-time correlation graph to determine the domain names that are closely correlated in the domain name space-time correlation graph.

10. The device for detecting the domain name family of the botnet according to claim 9, wherein the detection module is configured to:
decompose the domain name space-time correlation graph into subgraphs composed of a plurality of connected components according to connectivity, and remove an abnormal subgraph that does not meet a preset first connectivity index;
divide remaining subgraphs after removing the abnormal subgraph by using a community discovery algorithm to obtain communities composed of a plurality of connected components, and remove an abnormal community that does not meet a preset second connectivity index; and
measure degree of importance of each node in remaining communities after removing the abnormal community by using a web page ranking algorithm, and remove a potential abnormal node with low degree of importance.

11. The device for detecting the domain name family of the botnet according to any one of claims 7 to 10, wherein the device further comprises:
a security detection module configured to analyze, after taking the set of the corresponding domain names as the domain name family of the botnet, a family characteristic of the domain name family of the botnet, and perform security detection on an application scenario based on the analyzed family characteristic.

12. The device for detecting the domain name family of the botnet according to claim 11, wherein the device further comprises:
a monitoring module configured to determine, after taking the set of the corresponding domain names as the domain name family of the botnet, whether a new domain name belongs to the domain name family of the botnet by determining correlation between the new domain name and a known domain name, to monitor variant and expansion of the domain name family of the botnet.

13. A computer-readable storage medium, wherein the computer-readable storage medium stores a computer program that, when executed by a processor, implements steps of the method for detecting the domain name family of the botnet according to any one of claims 1 to 6.

## Patentansprüche

1. Verfahren zum Erfassen einer Domänennamenfamilie eines Botnetzes, umfassend:
Erhalten (S101) verdächtiger Domänennamen;
Erstellen (S102) eines Domänennamen-Raum-Zeit-Korrelationsgraphen auf der Grundlage von Korrelationen zwischen den verdächtigen Domänennamen in verschiedenen Dimensionen, wobei in dem Domänennamen-Raum-Zeit-Korrelationsgraphen jeder verdächtige Domänenname als ein Knoten genommen wird , eine Verknüpfung zwischen zwei Domänennamen mit mindestens einer Korrelation gebildet wird und die Korrelation zwischen den zwei Domänennamen als ein Attributwert der Verknüpfung genommen wird, wobei die Korrelationen in verschiedenen Dimensionen eine beliebige Kombination der folgenden Charakteristiken umfassen: Ähnlichkeit in grammatikalischen Merkmalen der Domänennamen, Ähnlichkeit in Korrelationen zwischen den Domänennamen und einem Virus, Ähnlichkeit in IP-Adressen, die von den Domainnamen aufgelöst werden und Ähnlichkeit im Zugriffsverkehr der Domainnamen; und
Bestimmen (S103) von Domainnamen, die im Domainnamen-Raum-Zeit-Korrelationsgraphen gemäß einem Bestimmungsindex einer Kompaktheit jedes Knotens in der Graphenberechnung eng korreliert sind, und Entnehmen einer Menge der entsprechenden Domainnamen als die Domainnamenfamilie des Botnetzes.

2. Verfahren zum Erfassen der Domänennamenfamilie des Botnetzes gemäß Anspruch 1, wobei das Bestimmen der Domänennamen, die im Domänennamen-Raum-Zeit-Korrelationsgraphen gemäß dem Bestimmungsindex der Kompaktheit jedes Knotens in der Graphenberechnung eng korreliert sind, umfasst:
Bestimmen der Domänennamen, die im Domänennamen-Raum-Zeit-Korrelationsgraphen gemäß der Spärlichkeit und dem durchschnittlichen Clustering-Grad eng korreliert sind.

3. Verfahren zum Erfassen der Domänennamenfamilie des Botnetzes gemäß Anspruch 1, wobei das Bestimmen der Domänennamenumfasst, die im Domänennamen-Raum-Zeit-Korrelationsgraphen gemäß dem Bestimmungsindex der Kompaktheit jedes Knotens in der Graphenberechnung eng korreliert sind, umfasst:
Entfernen eines anormalen Teilgraphen und eines anormalen Knotens in dem Domänennamen-Raum-Zeit-Korrelationsgraphen und Bestimmen der Domänennamen, die im Domänennamen-Raum-Zeit-Korrelationsgraphen eng korreliert sind.

4. Verfahren zum Erfassen der Domänennamenfamilie des Botnetzes gemäß Anspruch 3, wobei das Entfernen des anormalen Teilgraphen und des anormalen Knotens im Domänennamen-Raum-Zeit-Korrelationsgraphen umfasst:
Zerlegen (S201) des Domänennamen-Raum-Zeit-Korrelationsgraphen in Teilgraphen, die aus einer Vielzahl verbundener Komponenten gemäß der Konnektivität bestehen, und Entfernen eines anormalen Teilgraphen, der einen vorgegebenen ersten Konnektivitätsindex nicht erfüllt;
Teilen (S202) der verbleibenden Teilgraphen nach dem Entfernen des anormalen Teilgraphen unter Verwendung eines Algorithmus zur Ermittlung von Gruppen, um Gruppen zu erhalten, die aus einer Vielzahl von verbundenen Komponenten bestehen, und Entfernen einer anormalen Gruppe, die einen vorgegebenen zweiten Konnektivitätsindex nicht erfüllt; und
Messen (S203) des Wichtigkeitsgrads jedes Knotens in den verbleibenden Gruppen nach dem Entfernen der anormalen Gruppe unter Verwendung eines Algorithmus zur Webseiten-Bewertung und Entfernen eines potenziell anormalen Knotens mit niedrigem Wichtigkeitsgrad.

5. Verfahren zum Erfassen der Domänennamenfamilie des Botnetzes gemäß einem der Ansprüche 1 bis 4, wobei das Verfahren, nachdem die Menge der entsprechenden Domänennamen als die Domänennamenfamilie des Botnetzes genommen wurde, ferner umfasst:
Analysieren einer Familiencharakteristik der Domänennamenfamilie des Botnetzes und Durchführen einer Sicherheitserfassung bei einem Anwendungsszenario auf der Grundlage der analysierten Familiencharakteristik.

6. Verfahren zum Erfassen der Domänennamenfamilie des Botnetzes gemäß Anspruch 5, wobei das Verfahren, nachdem die Menge der entsprechenden Domänennamen als die Domänennamenfamilie des Botnetzes genommen wurde, ferner umfasst:
Bestimmen, ob ein neuer Domänenname zu der Domänennamenfamilie des Botnetzes gehört, indem eine Korrelation zwischen dem neuen Domänennamen und einem bekannten Domänennamen bestimmt wird, um Varianten und Erweiterungen der Domänennamenfamilie des Botnetzes zu überwachen.

7. Vorrichtung zum Erfassen einer Domänennamenfamilie eines Botnetzes, umfassend: ein Modul (100) zum Erhalten von Domänennamen, das so konfiguriert ist, dass es verdächtige Domänennamen erhält;
ein Modul (200) zum Erstellen eines Korrelationsgraphen, das so konfiguriert ist, dass es einen Domänennamen-Raum-Zeit-Korrelationsgraphen auf der Grundlage von Korrelationen zwischen den verdächtigen Domänennamen in verschiedenen Dimensionen erstellt, wobei in dem Domänennamen-Raum-Zeit-Korrelationsgraphen jeder verdächtige Domänenname als ein Knoten genommen wird, eine Verknüpfung zwischen zwei Domänennamen gebildet wird, die wenigstens eine Korrelation aufweisen, und die Korrelation zwischen den zwei Domänennamen als ein Attributwert der Verknüpfung genommen wird, wobei die Korrelationen in verschiedenen Dimensionen irgendeine Kombination der folgenden Charakteristiken umfassen: Ähnlichkeit in grammatikalischen Merkmalen der Domänennamen, Ähnlichkeit in Korrelationen zwischen den Domänennamen und einem Virus, Ähnlichkeit in IP-Adressen, die von den Domänennamen aufgelöst werden, und Ähnlichkeit im Zugriffsverkehr der Domänennamen; und
ein Erfassungsmodul (300), das so konfiguriert ist, dass es Domänennamen bestimmt, die im Domänennamen-Raum-Zeit-Korrelationsgraphen gemäß einem Bestimmungsindex einer Kompaktheit jedes Knotens in der Graphenberechnung eng korreliert sind, und einen Satz der entsprechenden Domänennamen als die Domänennamenfamilie des Botnetzes übernimmt.

8. Vorrichtung zum Erfassen der Domänennamenfamilie des Botnetzes gemäß Anspruch 7, wobei das Erfassungsmodul so konfiguriert ist, dass es die Domänennamen bestimmt, die im Domänennamen-Raum-Zeit-Korrelationsgraphen gemäß der Spärlichkeit und dem durchschnittlichen Clustering-Grad eng korreliert sind.

9. Vorrichtung zum Erfassen der Domänennamenfamilie des Botnetzes gemäß Anspruch 7, wobei das Erfassungsmodul so konfiguriert ist, dass es einen anormalen Teilgraphen und einen anormalen Knoten in dem Domänennamen-Raum-Zeit-Korrelationsgraphen entfernt, um die Domänennamen zu bestimmen, die in dem Domänennamen-Raum-Zeit-Korrelationsgraphen eng korreliert sind.

10. Vorrichtung zum Erfassen der Domänennamenfamilie des Botnetzes gemäß Anspruch 9, wobei das Erfassungsmodul so konfiguriert ist,
dass es das Domänennamen-Raum-Zeit-Korrelationsdiagramm in Unterdiagramme zerlegt, die aus einer Vielzahl von verbundenen Komponenten gemäß der Konnektivität bestehen, und ein anormales Unterdiagramm entfernt, das einen voreingestellten ersten Konnektivitätsindex nicht erfüllt;
dass es die verbleibenden Teilgraphen nach dem Entfernen des anormalen Teilgraphen unter Verwendung eines Algorithmus zur Ermittlung von Gruppen zu unterteilen, um Gruppen zu erhalten, die aus einer Vielzahl von verbundenen Komponenten bestehen, und eine anormale Gruppe entfernt, die einen vorgegebenen zweiten Konnektivitätsindex nicht erfüllt; und dass es den Wichtigkeitsgrad jedes Knotens in den verbleibenden Gruppen nach dem Entfernen der anormalen Gruppe unter Verwendung eines Algorithmus zur Webseiten-Bewertung misst und einen potenziell anormalen Knoten mit geringem Wichtigkeitsgrad entfernt.

11. Vorrichtung zum Erfassen der Domänennamenfamilie des Botnetzes gemäß einem der Ansprüche 7 bis 10, wobei die Vorrichtung ferner Folgendes umfasst:
ein Sicherheitserfassungsmodul, das so konfiguriert ist, dass es nach der Übernahme des Satzes der entsprechenden Domänennamen als die Domänennamenfamilie des Botnetzes ein Familienmerkmal der Domänennamenfamilie des Botnetzes analysiert und eine Sicherheitserfassung an einem Anwendungsszenario basierend auf dem analysierten Familienmerkmal durchführt.

12. Vorrichtung zum Erfassen der Domänennamenfamilie des Botnetzes gemäß Anspruch 11, wobei die Vorrichtung ferner Folgendes umfasst:
ein Überwachungsmodul, das so konfiguriert ist, dass es nach der Festlegung des Satzes der entsprechenden Domänennamen als die Domänennamenfamilie des Botnetzes bestimmt, ob ein neuer Domänenname zu der Domänennamenfamilie des Botnetzes gehört, indem es die Korrelation zwischen dem neuen Domänennamen und einem bekannten Domänennamen bestimmt, um Varianten und Erweiterungen der Domänennamenfamilie des Botnetzes zu überwachen.

13. Computerlesbares Speichermedium, wobei das computerlesbare Speichermedium ein Computerprogramm speichert, das, wenn es von einem Prozessor ausgeführt wird, Schritte des Verfahrens zum Erfassen der Domainnamenfamilie des Botnetzes gemäß einem der Ansprüche 1 bis 6 implementiert.

## Revendications

1. Procédé pour détecter une famille de noms de domaine d'un réseau de zombies dit botnet, comprenant les étapes consistant à :
obtenir (S101) des noms de domaine suspects ;
créer (S102) un graphe de corrélation espace-temps de noms de domaine sur la base de corrélations entre les noms de domaine suspects dans des dimensions différentes, dans lequel, dans le graphe de corrélation espace-temps de noms de domaine, chaque nom de domaine suspect est considéré en tant que noeud, une arête est formée entre deux noms de domaine ayant au moins une corrélation, et la corrélation entre les deux noms de domaine est considérée en tant que valeur d'attribut de l'arête, dans lequel les corrélations dans des dimensions différentes comprennent une combinaison quelconque des caractéristiques suivantes : similarité dans des caractéristiques grammaticales des noms de domaine, similarité dans des corrélations entre les noms de domaine et un virus, similarité dans des adresses IP résolues à partir des noms de domaine, et similarité dans des trafics d'accès des noms de domaine ; et
déterminer (S103) des noms de domaine qui sont étroitement corrélés dans le graphe de corrélation espace-temps de noms de domaine selon un indice de détermination d'une compacité de chaque noeud en informatique graphique, et considérer un ensemble des noms de domaine correspondants en tant que famille de noms de domaine du botnet.

2. Procédé pour détecter la famille de noms de domaine du botnet selon la revendication 1, dans lequel l'étape consistant à déterminer les noms de domaine qui sont étroitement corrélés dans le graphe de corrélation espace-temps de noms de domaine selon l'indice de détermination de la compacité de chaque noeud en informatique graphique comprend :
de déterminer les noms de domaine qui sont étroitement corrélés dans le graphe de corrélation espace-temps de noms de domaine selon un degré d'éparpillement et de regroupement moyen.

3. Procédé pour détecter la famille de noms de domaine du botnet selon la revendication 1, dans lequel l'étape consistant à déterminer les noms de domaine qui sont étroitement corrélés dans le graphe de corrélation espace-temps de noms de domaine selon l'indice de détermination de la compacité de chaque noeud en informatique graphique comprend :
d'enlever un sous-graphe anormal et un noeud anormal dans le graphe de corrélation espace-temps de noms de domaine, et de déterminer les noms de domaines qui sont intimement corrélés dans le graphe de corrélation espace-temps de noms de domaine.

4. Procédé pour détecter la famille de noms de domaine du botnet selon la revendication 3, dans lequel l'étape consistant à enlever le sous-graphe anormal et le noeud anormal dans le graphe de corrélation espace-temps de noms de domaine comprend :
de décomposer (S201) le graphe de corrélation espace-temps de noms de domaine en sous-graphes composés d'une pluralité de composants connectés selon une connectivité, et d'enlever un sous-graphe anormal qui ne satisfait pas à premier indice de connectivité prédéfini ;
de diviser (S202) les sous-graphes restants après enlèvement du sous-graphe anormal en utilisant un algorithme de découverte de communautés pour obtenir des communautés composées d'une pluralité de composants connectés, et enlever une communauté anormale qui ne satisfait pas à un second indice de connectivité prédéfini ; et
de mesurer (S203) un degré d'importance de chaque noeud dans les communautés restantes après enlèvement de la communauté anormale en utilisant un algorithme de classement de pages Web, et enlever un noeud anormal potentiel avec un faible degré d'importance.

5. Procédé pour détecter la famille de noms de domaine du botnet selon l'une quelconque des revendications 1 à 4, dans lequel, après avoir considéré l'ensemble des noms de domaine correspondants en tant que famille de noms de domaine du botnet, le procédé comprend en outre l'étape consistant à :
analyser une caractéristique de famille de la famille de noms de domaine du botnet, et effectuer une détection de sécurité sur un scénario d'application sur la base de la caractéristique de famille analysée.

6. Procédé pour détecter la famille de noms de domaine du botnet selon la revendication 5, dans lequel, après avoir considéré l'ensemble des noms de domaine correspondants en tant que famille de noms de domaine du botnet, le procédé comprend en outre l'étape consistant à :
déterminer si un nouveau nom de domaine appartient à la famille de noms de domaine du botnet en déterminant une corrélation entre le nouveau nom de domaine et un nom de domaine connu, afin de surveiller une variante et une expansion de la famille de noms de domaine du botnet.

7. Dispositif destiné à détecter une famille de noms de domaine d'un réseau de zombies dit botnet, comprenant :
un module d'obtention de noms de domaine (100) configurée pour obtenir des noms de domaine suspects ;
un module de création de graphe de corrélation (200) configuré pour créer un graphe de corrélation espace-temps de noms de domaine sur la base de corrélations entre les noms de domaine suspects dans des dimensions différentes, dans lequel, dans le graphe de corrélation espace-temps de noms de domaine, chaque nom de domaine suspect est considéré en tant que noeud, une arête est formée entre deux noms de domaine ayant au moins une corrélation, et la corrélation entre les deux noms de domaine est considérée en tant que valeur d'attribut de l'arête, dans lequel les corrélations dans des dimensions différentes comprennent une combinaison quelconque des caractéristiques suivantes : similarité dans des caractéristiques grammaticales des noms de domaine, similarité dans des corrélations entre les noms de domaine et un virus, similarité dans des adresses IP résolues à partir des noms de domaine, et similarité dans des trafics d'accès des noms de domaine ; et
un module de détection (300) configuré pour déterminer des noms de domaine qui sont étroitement corrélés dans le graphe de corrélation espace-temps de noms de domaine selon un indice de détermination d'une compacité de chaque noeud en informatique graphique, et considérer un ensemble des noms de domaine correspondants en tant que famille de noms de domaine du botnet.

8. Dispositif destiné à détecter la famille de noms de domaine du botnet selon la revendication 7, dans lequel le module de détection est configuré pour :
déterminer les noms de domaine qui sont étroitement corrélés dans le graphe de corrélation espace-temps de noms de domaine selon un degré d'éparpillement et de regroupement moyen.

9. Dispositif destiné à détecter la famille de noms de domaine du botnet selon la revendication 7, dans lequel le module de détection est configuré pour :
enlever un sous-graphe anormal et un noeud anormal dans le graphe de corrélation espace-temps de noms de domaine pour déterminer les noms de domaines qui sont intimement corrélés dans le graphe de corrélation espace-temps de noms de domaine.

10. Dispositif destiné à détecter la famille de noms de domaine du botnet selon la revendication 9, dans lequel le module de détection est configuré pour :
décomposer le graphe de corrélation espace-temps de noms de domaine en sous-graphes composés d'une pluralité de composants connectés selon une connectivité, et enlever un sous-graphe anormal qui ne satisfait pas à premier indice de connectivité prédéfini ;
diviser les sous-graphes restants après enlèvement du sous-graphe anormal en utilisant un algorithme de découverte de communautés pour obtenir des communautés composées d'une pluralité de composants connectés, et enlever une communauté anormale qui ne satisfait pas à un second indice de connectivité prédéfini ; et
mesurer un degré d'importance de chaque noeud dans les communautés restantes après enlèvement de la communauté anormale en utilisant un algorithme de classement de pages Web, et enlever un noeud anormal potentiel avec un faible degré d'importance.

11. Dispositif destiné à détecter la famille de noms de domaine du botnet selon l'une quelconque des revendications 7 à 10, dans lequel le dispositif comprend en outre :
un module de détection de sécurité configuré pour analyser, après avoir considéré l'ensemble de noms de domaine correspondants en tant que famille de noms de domaine du botnet, une caractéristique de famille de la famille de noms de domaine du botnet, et pour effectuer une détection de sécurité sur un scénario d'application sur la base de la caractéristique de famille analysée.

12. Dispositif destiné à détecter la famille de noms de domaine du botnet selon la revendication 11, dans lequel le dispositif comprend en outre :
un module de surveillance configuré pour déterminer, après avoir considéré l'ensemble des noms de domaine correspondants en tant que famille de noms de domaine du botnet, si un nouveau nom de domaine appartient à la famille de noms de domaine du botnet en déterminant une corrélation entre le nouveau nom de domaine et un nom de domaine connu, afin de surveiller une variante et une expansion de la famille de noms de domaine du botnet.

13. Support de stockage lisible par ordinateur, dans lequel le support de stockage lisible par ordinateur stocke un programme d'ordinateur qui, quand il est exécuté par un processeur, met en oeuvre les étapes du procédé pour détecter la famille de noms de domaine du botnet selon l'une quelconque des revendications 1 à 6.
